# EUROPÄISCHE PATENTSCHRIFT

(11) **EP 1 946 195 B1**
(45) Veröffentlichungstag und Bekanntmachung des Hinweises auf die Patenterteilung: **12.08.2009**
(21) Anmeldenummer: 06828878.6
(22) Anmeldetag: 27.10.2006
(51) Int. Cl.: G05D 1/08

(54) **VERFAHREN UND VORRICHTUNG ZUR FERNSTEUERUNG UND STABILISIERUNG UNBEMANNTER LUFTFAHRZEUGE**
METHOD AND DEVICE FOR REMOTELY CONTROLLING AND STABILIZING UNMANNED AIRCRAFT
PROCEDE ET DISPOSITIF POUR TELECOMMANDER ET STABILISER DES AERONEFS SANS EQUIPAGE

(30) Priorität: 27.10.2005 DE 102005051799
(43) Veröffentlichungstag der Anmeldung: 23.07.2008
(73) Patentinhaber: Reich, Stefan, 82418 Murnau (DE)
(72) Erfinder: Reich, Stefan, 82418 Murnau (DE)
(86) Internationale Anmeldenummer: PCT/EP2006/010370
(87) Internationale Veröffentlichungsnummer: WO 2007/048626

(56) Entgegenhaltungen:
- EP-A- 0 752 634
- DE-A1- 10 258 545
- DE-A1-3102005 006 99

## Beschreibung

Die Erfindung betrifft ein Verfahren und eine Vorrichtung zur Erleichterung der Steuerung und insbesondere zur Stabilisierung unbemannter Luftfahrzeuge, insbesondere für Modell-Hubschrauber, die vom Boden aus gesteuert werden, oder auch andere Drehflügler, schwebende Drohnen und Modellflugzeuge.

Die Steuerung solcher Flugkörper ist aus mehreren Gründen schwierig und nur geübten Piloten möglich. Insbesondere muss jede zur Steuerung oder auch zufällig eingenommene nicht-neutrale Fluglage, etwa eine Roll- oder Nick-Neigung, durch den Piloten wieder geradegerichtet werden, andemfalls würde jede beibehaltene Neigung in eine Flugbahn mit stetig zunehmender Geschwindigkeit umgesetzt. Das Geraderichten erfolgt üblicherweise durch fortlaufende korrigierende Steuerung des Piloten. Hierfür ist jedoch Training und ständige Sichtkontrolle erforderlich. Größere Sicht-Abstände erschweren die Steuerung zusätzlich. Befindet sich ein Hubschrauber beispielsweise senkrecht über dem Piloten, ist ein Still-Schweben sogar unmöglich, da nur stärkere Neigungen sichtbar sind. Zur Lösung des Problems werden bisweilen Lage-Stabilisierungen verwendet, die aber entweder ungenau oder wegen der Mess-Instrumente meist aufwändig sind.

DE 69502379.9-08, JP 10328427 und US 5,738,300 beschreiben Autopilot-Systeme, die für bemannte Hubschrauber unter Anderem einen gyroskopischen Messfühler und ferner Mittel zum Integrieren von Signalen beinhalten.

Ferner sind Vorrichtungen zur Lageregelung durch optische Neigungs-Messung anhand des Einfallswinkels von Licht oder Infrarot bekannt, die aber nachteilhafterweise auf einen optischen Horizont angewiesen sind.

Ferner sind Kreisel-Stabilisatoren für Bewegungen um die Hochachse bekannt, die einen gyroskopischen Drehgeber enthalten. Hierbei wird eine Istwert-Sollwert-Differenz zwischen dem zur Drehrate proportionalen Messwert und einem vom Piloten stammenden Sollwert gebildet, und diese Differenz über eine Regelschleife, etwa eine PID-Regelschleife, welche einen Integrator enthalten kann, an das betreffende Stellglied geleitet. Würde man derartige Stabilisierungen für die Neig-Achsen, also Roll- und / oder Nick-Achse vorsehen, ließe sich zwar eine Stabilisierung gegen mechanische und aerodynamische Abweichungen erhalten, und somit mechanische Rotorkopf-Stabilisierungen ersetzen, aber ein automatisches Neutralisieren einer bestehenden Neigung ist nicht möglich. Ferner werden kleinste Driften des Mess-Signals zwangsweise mit- integriert und summieren sich zu Fehlern, die einer fehlerhaften Schräglage entsprechen.

Ferner ist aus Zeitschrift ROTOR 7/2002 ein Stabilisierungssystem "VR-Stabi" mit für die Nick- und die Roll-Achse vorgesehenen elektronischen Kreiseln bekannt, bei dem die für Modellhubschrauber übliche mechanische Paddelstange / Stabistange elektronisch simuliert wird. Hierzu wird für die Nick-und Roll-Steuer-Achsen dem ausgegebenen Stellwert ein integriertes Drehraten-Meßsignal zugemischt, wobei das Steuersignal des Piloten einerseits direkt und andererseits in den Eingang des Integrators beigemischt wird. Ein Geraderichten einer eingenommenen Schräglage ist dabei jedoch nicht vorgesehen.

DE 103 04 209 A1 beschreibt eine Trimm-Vorrichtung, welche Steuersignale, etwa aus einem Steuerknüppel, integriert und hieraus einen neutralen Trimmwert erzeugt und somit das Trimmen von Hand auf eine Neutralstellung erübrigt. Der Pilot muss jedoch weiterhin jeder auftretenden Schräglage aktiv entgegensteuem; auch nach jeder absichtlich eingeleiteten Schräglage müsste er die Neigung mit entsprechend dosiertem Gegen-Ausschlag wieder geraderichten, da er nur die Änderungsrate der Neigung (Roll oder Nick-Rate) steuern kann.

EP 0 752 634 beschreibt eine Vorrichtung zur Neigungsnrgelung eines ferngesteuerten Hubschraubers, bei dem ein Drehraten-Mess-Signal im Rahmen eines PID-Zweiges integriert wird, wobei das Integral als Messwert für den Neigungs-Neigung dargestellt wird.

DE 102 58 545 A1 beschreibt ein Stabilisierungssystem, das die Regelung einer Flugneigung beinhaltet und hierfür als Messwert einer Neigung ein zeitliches Integral eines zur Winkelgeschwindigkeit der Neigung proportionalen Drehsignals vorschlägt. Als Gegenmaßnahme gegen die durch die Integration auftretenden Nullpunkts-Fehler ist dort (siehe insbes. Abs. 0055) eine Kombination mit anderen Neigungs-Messnrerten aus weiteren Instrumenten vorgeschlagen, was jedoch zusätzlichen Aufwand bedeutet.

Ziel der Erfindung ist ein Verfahren und eine Vorrichtung für unbemannte femgelenkte schwebefähige Luftfahrzeuge, insbesondere Drehflügler, welche zumindest näherungsweise eine Steuerung des Neigungswinkes ermöglichen, also beispielsweise einen Nick- und / oder Roll- Winkel, und bei Neutralisieren des Steuerknüppels die Horizontallage zumindest näherungsweise wiederherstellt. Insbesondere soll ein Stellwert erzeugt werden können, der zum Ansteuern eines Stellgliedes, z.B. eines Servomotors, geeignet ist.

Hierzu sind die in den unabhängigen Ansprüchen gekennzeichneten Merkmale vorgesehen. Merkmale bevorzugter Ausführungsformen der Erfindung sind in den Unteransprüchen bezeichnet.

Als Drehratensensor kann beispielsweise ein Piezo-Gyroskop oder ein SMS (Silicon micro machine) - Gyroskop verwendet werden.

Das integrierte Mess-Signal des Drehratensensors kann als Istwert eines Neigungswinkels aufgefasst werden. Demnach kann eine Neigungsregelung erreicht werden, welche bei Zurücknahme eines Steuerausschlags die Neigung automatisch auf annähemde Horizontallage zurückregelt.

Gemäß der Erfindung kann eine Neigungsregelung erfolgen, indem ein Drehratensignal zu einem Istwert integriert wird, wobei zur Vermeidung von Nulldriften die Integrationszeit eingeschränkt ist. Zur Neigunsregelung wird ein Sollwert hinter der Integral-Bildung eingemischt oder hiervon subtrahiert. Die so gebildete Ist-Soll-Differenz kann über die bekannten Mittel einer Regelschleife an das entsprechende Stellglied gegeben werden. Als Ist-Soll-Differenz kann die Differenz zwischen einem vom Piloten gegebenen Neigungs-Sollwert und einem im Integrator berechneten angenäherten Neigungs-Istwert dienen. Die Erfindung ermöglicht, dass bei einem ferngesteuerten schwebefähigem Luftfahrzeug nach Ansteuerung und Einnahme eines Neigungswinkels und anschließendem Neutralisieren des Steuerknüppels die Horizontallage weitgehend automatisch wiederherstellt wird.

Durch die erfindungsgemäße Regelung wird insbesondere ein Regelkreis geschlossen., dieser kann insbesondere als PID ausgeführt werden.. Anders als bei herkömmlichen PID (proportional-integral-differential)-Regelungen ist die Dauer der Integration zeitlich eingegrenzt oder eingeschränkt oder eingedämmt. Insbesondere kann die Einschränkung erfolgen, indem ein Anteil des Istwertes und / oder Sollwertes in den Eingang zurückgekoppelt wird.

Während am Eingang des Integrators kein Signal anliegt, kann die Einschränkung der Integrationszeit ein Zurückziehen oder 'Entladen' des Integals auf einen Nullwert bewirken. Das Zurückziehen kann einen asymptotischen Zeitverlauf haben. Durch die Eingrenzung der Integrationszeit wird vermieden, dass sich Nulldriften auf störende Weise dem Integralwert aufsummieren.

Die für die Eingrenzung maßgebliche Zeitkonstante oder das Zeitfenster kann definiert sein; die Definition kann eine vorgegebenen Zeitkonstante oder ein vorgegebenes Zeitfenster bedeuten.

Ein Vorteil der vorliegenden Erfindung ist, dass durch Driften auftretende Fehler eliminiert werden können. Herkömmlicherweise werden durch die Integration eines nur inkremental vorliegenden Drehraten-Meßsignals in ein Neigungs-Signal die Nullpunkt-Driften des Meßsignals mit-integriert und summieren sich im Laufe der Zeit automatisch zu Fehlern, die einer fehlerhaften Schräglage entsprechen. Außerdem fällt bei der Integration allgemein eine undefinierte Integrationskonstante an. Beide Probleme können durch die Erfindung vorteilhaft gelöst werden.

Mit der Erfindung können Nachteile vermieden werden, welche übliche Trägheits-Navigations-Systemen oder künstliche Horizonte wegen der für die Nick- und Roll-Achse erforderlichen Neigungs-Sensoren oder Dreiachs- Beschleunigungs-Sensoren aufweisen. Diese zusätzlichen Sensoren, die nach dem Prinzip einer Wasserwaage auf die Gravitation reagieren und deren Messwerte nach dem Stand der Technik nötig sind, um die bei der Integration eines Drehraten-Messignals fehlende Information über den absoluten Neigwinkel zu liefern, weisen bei der Anwendung in kleinen Hubschraubern mehrere Probleme auf: Wegen der Eigenbeschleunigung im Flug kann die Neigung mittels Gravitation nur eingeschränkt gemessen werden. Ferner ist eine auf Beschleunigung basierende Messung stark durch auftretende Vibrationen beeinträchtigt, bedingt durch Antrieb und mechanische Unwuchten, so dass eine ausreichende Messgenauigkeit sehr schwer zu erreichen ist. Mit der Erfindung können weiterhin Kostenvorteile bei der Herstellung erreicht werden.

Die Integration kann durch einen programmgesteuerten Mikroprozessor gesteuert werden; das Mess-Signal kann über Analog-Digital-Wandlung eingespeist werden.

Die Integration kann durch eine fortlaufend wiederholte Addition eines kleinen Anteils des zu integrierenden Signals erfolgen. Um gemäß einem vorteilhaften Ausführungsbeispiel der vorliegenden Erfindung das bei der Integration angewendete Zeitfenster einzuschränken, besteht z.B. eine Möglichkeit darin, dass ein kleiner Anteil des integrierten Ergebnisses gegenkoppelnd in den Eingang des Integrators zurückgespeist wird. Dies ermöglicht, dass sich der Integrator über eine längere Zeitdauer selber entladen kann. Es ergibt sich eine asymptotische Zeitfunktion. Der Faktor der Einspeisung ist der Grad der Gegenkopplung. Dieser steltt eine Beziehung zwischen den unintegrierten und dem zeitlich integrierten Signal dar, hat daher die physikalische Dimension einer Frequenz und entspricht dem Kehrwert der Entlade-Zeitkonstante. Eine Einmischung mit geringem Anteil etspricht einer großen Zeitkonstante. Die Integration kann digital, insbesondere mikroprozessorgesteuert oder auch analog-elektronisch realisiert werden. Eine analoge Möglichkeit der Realisierung ist ein als Integrator geschaltetes RC-Glied, welches eine Zeitkonstante aufweist. In einer digitalen Ausführungsform kann z.B. ein Zeit-Grenzwert für die Integration in entsprechenden Speichern nur lesbar oder les- und schreibbar abgespeichert werden.

Der Begriff "zeitliche Einschränkung" bedeutet nicht notwendigerweise scharfe Zeitgrenzen. Die zeitliche Einschränkung bewirkt, dass kleine Messfehler oder Nullpunkt-Driften des Gyroskops nicht endlos auf-integriert werden, sondern in ihrer Wirkung begrenzt werden; im beschriebenen Fall auf einem asymptotischen Grenzwert.

Die definierte Zeitkonstante kann vorteilhafterweise länger gewählt sein als die Dauer üblicher Steuer-Ausschläge.

Die eingeschränkte Integration bewirkt, dass das als Drehratensignal vorliegende Mess-Signal nicht in einen exakten, sondern in einen modifizierten Neigungs-Istwert umgewandelt wird. Die Einschränkung der Integrationsdauer ist bei herkömmlichen Regelungen unüblich, da dann nicht mehr der volle Ausgleich, und keine vollwertige Regelung möglich ist. Insbesondere erscheint zunächst auch bei der Darstellung eines Neigungs-Messwertes aus einem Drehraten-Messwert eine Eingrenzung der Integrationsdauer deshalb nachteilig, weil dadurch länger anhaltende Neigungen nicht mehr exakt gemessen werden, sondern unterbewertet, also falsch gemessen werden können.

Bei einer Neigungs-Regelung resultiert hierdurch, dass von einer eingenommen Flugneigung ein geringer Rest verbleibt, wenn das pilotenseitige Steuersignal wieder zurückgenommen wind.

Im erfindungsgemäßen Fall kann die Einschränkung der Inegrationsdauer und die dadurch bedingte Abweichung jedoch vorteilhaft sein. Der Grund ist, dass im Flug, insbesondere beim Schweben eines Hubschraubers, nicht nur die herkömmlichen Steuer-Ausschläge, welche einer Neigungs-Rate proportional sind, sondern sogar die Neigungs-Ausschläge, also die erfindungsgemäßen Signale Istwert und Sollwert, gewöhnlich nur eine kurze Dauer haben, und in ihrem über längere Zeit betrachteten Mittelwert fast exakt Null ergeben. Dies kann aus dem Sachverhalt erklärt werden, dass im Flug eines Hubschraubers während geneigter Fluglage fast keine Gravitations-Beschleunigungs-Komponenten quer zur Rotorwelle auftreten, weil Luftkräfte hauptsächlich parallel zur Rotorwelle auftreten. Längere andauernde Neigungen würden, bedingt durch das integrierende Flugverhalten, wie eingangs erläutert in eine Flugbahn mit stetig weiter anwachsender Geschwindigkeit resultieren, und sind daher beim Schweben nicht üblich. Die Einbuße durch die Eingrenzung der Integrationsdauer ist daher nur unwesentlich, sofern die Eingrenzung der Integrationszeit eine ähnliche oder längere Inegrationszeit erlaubt als die Dauer üblich vorkommender Neigungen.

Die nach dem automatischen Zurückholen verbleibenden Rest-Neigungen sind nur klein und können sehr leicht durch den Piloten korrigiert werden. Driften durch Offset-Fehler werden durch die Eingrenzung der Inegrations-Dauer jedoch wirksam unterdrückt, was einen wesentlichen Vorteil ermöglicht.

Im Vergleich mit anderen herkömmlichen Kreiselstabtlisatoren ist die Situation deshalb anders, weil die vorliegende Lösung das Steuersignal als Sollwert nicht vor, sondern hinter den Integrator einmischt. Hieraus resultiert eine im Vergleich zum herkömmliche Kreiselstabilisator zeitlich differenzierte Reaktion auf das Steuersignal.

Vorteilhafterweise müssen außer den Drehraten-Sensoren keine weiteren die betreffende Neigung Achse messenden Instrumente beteiligt sein um ein brauchbares Ergebnis zu erzielen. Die Erfindung kann insbesondere ohne beschleunigungsmessende Instrumente arbeiten.

Eine besonders gute Rückregelung in die Horizontallage hat sich bei Verwendung der Erfindung in Zusammenhang mit Modellhubschraubem gezeigt, welche wie üblich mit herkömmlicher mechanischer Stabilisierung ausgerüstet sind. Hierzu besitzen solche Hubschrauber eine sogenannte Stabistange oder Padadelstange, die ihrerseits als Kreisel wirkt.

Eine weitere Möglichkeit, den Integrator zeitlich einzuschränken, besteht darin, einen kleinen Anteil des Sollwertes in den Eingang des Integrators zu speisen. Auch diese Maßnahme hat die Wirkung, die Integrationszeit im Sinne der vorliegenden Erfindung einzugrenzen und ein vergleichbares Verhalten zu erzeugen. Eine Ähnlichkeit basiert darauf, dass im Flug wegen der arbeitenden Regelschleife der Istwert sich laufend dem Sollwert angleicht, und ihm somit ähnlich ist.
Die oben beschriebene Rückspeisung des Integrals hat jedoch den Vorteil, dass die beabsichtigte Wirkung auch ohne geschlossene Regelschleife, also ohne Flug und am Boden, zustande kommt.

Eine weitere Möglichkeit, das zeitlich eingeschränkte Integral zu erzeugen, besteht darin, dass Messwerte fortlaufend in Zwischenspeicher-Zellen abgelegt werden und aus einer definierten Anzahl gespeicherter Werte aktuelle und ggf. gewichtete Mittelwerte gebildet werden. Dies entspricht einer Faltung mit einer definierbaren Fensterfunktion.

Gemäß einem bevorzugten Ausführungsbeispiel der Erfindung ist die definierte Zeitkonstante länger ist als die Dauer üblicher Steuer-Ausschläge. Diese Dauer kann je nach Anwendung bzw. Steuervorrichtung und/oder Flugobjekt geeignet definiert bzw. vorgegeben werden. Die Dauer üblicher Steuerausschläge kann z.B. dadurch definiert sein, wie lange das Luftfahrzeug braucht, um bei einer vorgegenenen Amplitude eines Steuerausschlags des Piloten einen vorgegebenen Neigungswinkel einzunehmen, beispielsweise um einen Neigungswinkel von 30 Grad bei der Hälfte des Vollauschlags des Steuerknüppels zu erreichen oder einen Neigungswinkel von 45 Grad bei Vollausschlag. Die Dauer des Zeitfensters kann auch fest vorgegeben werden, z.B. mit einem Wert zwischen 2 und 12 Sekunden, insbesondere zwischen 3 und 7 Sekunden, wie z.B. 5 Sekunden. Bei Gyroskopen mit geringerer Drift sind längere Zeitkonstanten vorteilhafter. In einer weiteren Ausführungsform zur Festlegung der Dauer des Zeitfensters kann ein Betriebsmodus der Steuervorrichtung vorgesehen sein, in dem der Pilot einen Probeflug mit verschiedenen Einstellungen durchführt und er selbst die Einprogrammierung einer geeigneten Zeitfenster Dauer in die Seuervorrichtung veranlasst oder eine Erfassungseinrichtung einen Wert dafür ermittelt.

Nachfolgend werden Ausführungsbeispiele der Erfindung beschrieben.

### Es zeigen:

- Figur 1:: Eine Vorrichtung zur Neigungs-Steuerung ohne einen die Neigung betreffenden Sensor,
- Figur 2:: Eine entsprechende Vorrichtung für mehrere Steuer-Achsen,
- Figur 3:: Eine Vorrichtung zur Neigungs-Regelung mit einem Sensor pro Steuerachse und mehreren Varianten davon,
- Figur 4:: Beispielhafte Signalverläufe der Vorrichtung von Figur 3.
Soweit gleiche Bezugsobjekte in den Figuren erscheinen, werden gleiche Bezugszeichen verwendet.

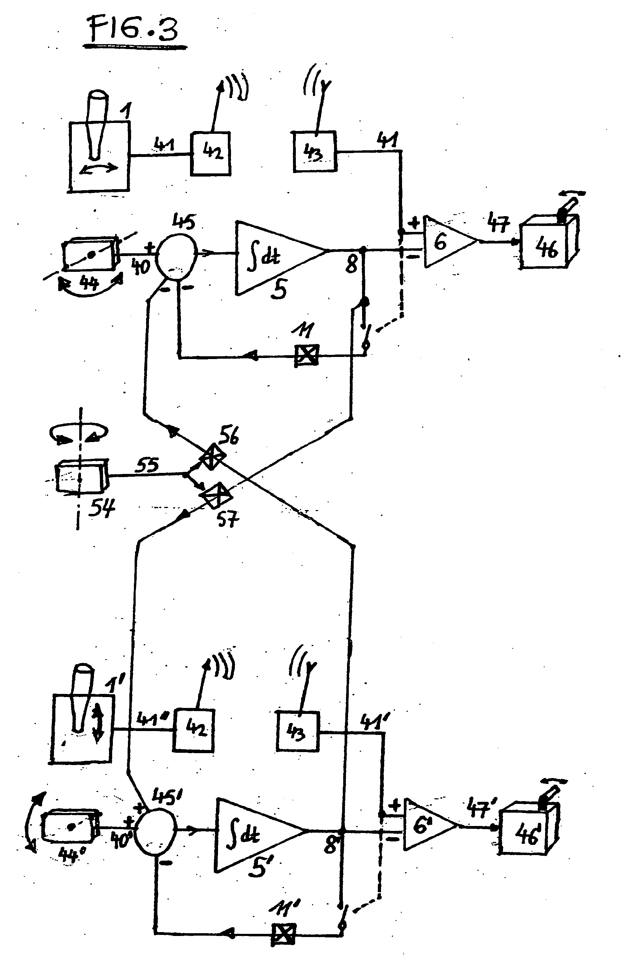

Figur 3 zeigt im oberen Abschnitt ein erstes Ausführungsbeispiel als Blockdiagramm. Ein von einem am Boden befindlichen Piloten über den Steuerknüppel 1 erzeugtes Steuersignal 41 wird über Sender 42 und Empfänger 42 in die Stabilisierungs-Vorrichtung übertragen, die die übrigen dargestellten Teile enthält und sich an Bord eines vom Piloten ferngesteuerten Hunbschraubers befindet. Zum empfangenen Steuersignal 41 wird im Mischer 6 das aus dem Integrator 5 stammende Signal 8 als Istwert negativ gemischt und die entstehende Ist-Soll-Differenz 47 als Stellwert der Rudermaschine 46 zugeführt, die die Rollbewegung eines Hubschraubers anlenkt. Das empfangene Steuersignal 41 wirkt als Sollwert. Der Istwert 8 wird erzeugt, indem einerseits das aus Gyroskop 44 stammende Rollraten-Mess-Signal 40 im Integrator 5 integriert wird und andererseits das integrierte Signal über einen definierten kleinen Faktor 11 rückkoppelnd über den Mischer 45 in den Integrator gegengekoppelt wird, wodurch die Integrationszeit eingeschränkt wird. Alternativ oder zusätzlich kann, gestrichelt dargestellt, das Steuersignal 41 zum Einmischen herangezogen werden, um wie oben beschrieben eine ähnliche, durch die Stauer-Aktion bedingte effektive Einschränkung der Integration zu bewirken. Ein Einmischen des Steuersignals 41 in den Integrator ist jedoch nicht erforderlich. In den Eingang des Integraris kann eine Einmischung des Steuersignals vorteilhafterweise zu einem Anteil erfolgen, der geringer ist als der Anteil des rück-gemischten Integrals 8. Ein Mischungsanteil des Steuersignals kann auch hier mit der physiakalischen Dimension Frequenz oder Zeit definiert werden, Bei der Beurteilung von brauchbaren Michungs-Anteilen ist die die Summe aus der vom Integralwert 8 und vom Steuersignal 41 eingespeiste Anteile dafür maßgeblich, wie rasch die effektive zeitliche Einschränkung des Integrals erfolgt. Die oben genannten Werte einer vorteilhaften Zeitkonstante sind dann auf die Summe beider Einspeisungen zu beziehen.

Eine vorteilhafte Einstellung der Zeitkonstanten kann ferner in der Weise vorgenommen werden, dass ohne Flugbewegung, etwa bei festgehaltenem Flugkörper, der Integralwert 8, ausgehend von einem Nullwert, nach dem einmaligen Geben und Beenden eines Steuerausschlages üblicher Dauer, entweder unverändert bleibt, oder einen Wert aufweist, dessen Einfluss auf den Stellwert 47 gering ist gegenüber dem Anteil des Steuersignals 41 im Stellwert.

Unabhängig können weitere regeltechnische Einrichtungen vorgesehen sein, etwa eine PID-Mischung (nicht dargestellt) im Stellwert-Zweig 47.

Ferner kann das integrierte Signal 8 durch einen Begrenzer (nicht dargestellt) in seiner Ampitude begrenzt werden, bevor es in den Mischer 6 gelangt. Hierdurch kann erreicht werden, dass man die Neigungs-Regelung übersteuern kann, indem man Steuerausschläge gibt, die größer sind als die Amplitudenbegrenzung.

Ferner kann vorteilhafterweise hinter den beschriebenen Integrator ein zweiter Integrator vorgesehen werden, dessen Eingang mit dem erste Integral beaufschlagt wird. Der zweite Integrator kann somit kaskadiert angeordnet sein. Er kann fortlaufende Driften aufsummieren, welche eventuell durch Temperaturdrift oder sonstige Ungenauigkeit des Drehraten-Meßsignals auftreten. Der zweite Integralwert kann gegenkoppelnd in den ersten Integrator eingemischt werden, d.h. vom Drehraten-Meßsignal subrtahiert werden; hierdurch kompensiert er die Drift von dem Meßsignal heraus. Der Grad der Einmischung kann so gering festgelegt sein, dass sich eine gegenüber den übrigen Abläufen lange Zeitkonstante ergibt. Sinnvoll sind Werte von ca. 10 Sekunden oder mehr.

Einer der Unterschiede zudem als als Stand der Technik erwähnten, aus der ROTOR 7/2002 bekannten "VR-Stabi", welcher das Verhalten eines mechanischen Stabilisators simuliert, begründet sich folgendermaßen: In den dort auftretenden Signalen kommen kein tatsächlicher oder angenäherter Neigungs-Messwert vor. Insbesondere hat das Einmischen des Steuersignals in den Integrator die Folge, dass das Integral während eines Steuerausschlags laufend erehlich anwächst, somit auch die resultierende Flugneigung, was einem herkömmlichen Flugverhalten des Hubschraubers entspricht und mit der dort vorgesehenen Abstimmung auch beabsichtigt ist.

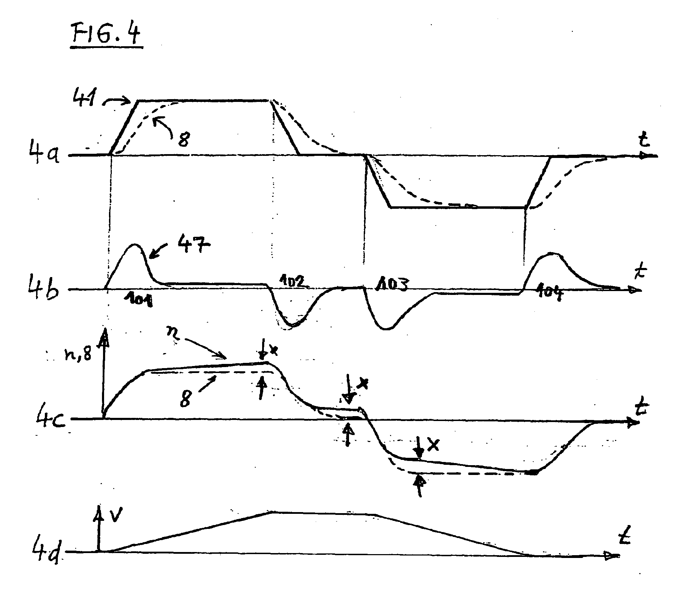

Figur 4 zeigt beispielhaft, auf einer Zeitachse t, Signalverläufe betreffend eine Steuer-Achse, wobei von einer horizontalen Fluglage im Stillstand und ohne äußere Stör-Einflüsse ausgegangen wird. Erläutert wird eine Wirkungskette von Sollwert über Stellwert und Fluglage zu angenähertem Fluglage-Messwert. Alls Signale sind beispielhaft und können auch anders verlaufen.

Grafik 4a zeigt einen Zeitverlauf eines vom Piloten gegebenen Steuersignals 41, als Sollwert einer Neigung. Es besteht beipielhaft aus einem ersten Steuerausschlag, positiv dargestellt, mit dem eine Soll-Neigung eingeleitet werden soll, dann einer Neutralstellung, mit der ein wieder-Geraderichten erreicht werden soll, dann einem Gegen-Ausschlag, mit dem ein Stillstand durch wieder-Abbremsen der mitlerweile erreichten Fluggeschwindigkeit erreicht werden soll.

Ferner gestrichelt ist der aus dem Integrator angenäherte Istwert 8 dargestellt. Die Ähnlichkeit des Istwerts resultiert daraus, dass der Regelkreis über die Stellglieder 46 geschlossen ist; bei Auftreten einer ist-soll-Differenz passt sich die Fluglage dementsprechend an, dass die Differenz wieder minimiert wird.

Grafik 4b zeigt ein resultierendes Stellsignal 47 als Differenz zwischen 41 und 8, welches den Flugkörper durch die Auslenkung im Bereich 101 neigt, anschließend im Bereich 102 wieder aufrichtet, dann im Bereich 103 gegen-neigt und im Bereich 104 wieder aufrichtet. Der Stellwert kann ferner begrenzt werden. Dieser Graph entspricht auch den Steuerbewegungen, die der Pilot ohne Verwendung der vorliegenden Erfindung ausführen müsste.

Grafik 4c zeigt die hieraus resultierende wirkliche Flugneigung n; sie weicht geringfügig gegenüber dem ursprünglichen Steuersignal 4a ab: Einerseits weist sie entsprechend der Reaktionszeit langsamere Flanken auf, andererseits weist sie die durch das Entladen des Integrators resultierende Abweichung x auf, die sich nach dem Gegenausschlag dann wieder aufhebt.

Ferner ist, wie in Grafik 4a, gestrichelt dargestellt das integrierte Signal 8 als angenäherten Fluglage-Messwert. Die Wirkung der eingegrenzten Integratrionsdauer wird am Unterschied x zwischen den Graphen deutlich.

Grafik 4d zeigt die resultierende Fluggeschwindigkeit v. Unter Vernachlässigung äußerer Einflüsse entspricht die Fluggeschwindigkeit v annähernd einem zeitlichen Integral der Flugneigung. Dieses Verhalten ist jedoch wegen der Luftkräfte (Widerstand) dadurch am besten anzunähern, dass auch dieses Integral einer zeitlichen Begrenzung unterzogen wird.

In diesem Zusammenhang kann der Vorteil erreicht werden, dass die zeitliche Begrenzung des Integrals 8 leicht auf das Flugverhalten in der Weise abgestimmt werden kann, dass sie ungefähr der Integrationszeit bei der Aufnahme von Fluggeschwindigkeit entspricht.
Somit resultiert bei der Anwendung, dass der Pilot mit dem Stellwert praktisch die Beschleunigung des Hubschraubers steuert, und dass bei Abbremsen auf Stillstand automatisch auch der Fehler des Neigungs-Istwertes wieder zurückgenommen wird, der durch die eingegrenzte Integrationsdauer zunächst aufgetreten war.

Figur 3 zeigt im unteren Abschnitt ein zweites, für die Nick-Achse aufgebautes Regelsystem, das der oberen entspricht, sodass die Neigung in beiden Bord-Koordinaten geregelt wird

Wie oben beschrieben basiert die exakte Funktion der Erfindung auch auf der Tatsache, dass die übliche Dauer vorkommender Neigungen aufgrund des Flugverhaltens klein ist und keine andauernde Neigung in eine Richtung vorkommt. In Figur 4d wird dies anschaulich anhand der anwachsenden Geschwindigkeit bei länger auftretenden Neigungen. Dies gilt für Neigungen gemessen in festen Raumkoordinaten. Die bisher beschriebene Lösung eignet sich daher insbesondere für Flüge, bei denen der Flugkörper sich nicht wesentlich um seine eigene Hochachse dreht, also z.B. Schwebeflüge eines Hubschraubers. Andernfalls entsteht die Schwierigkeit, dass sich die Drehachsen, auf die sich die Messwerte beziehen, nämlich Nick und Roll-Achse, selber drehen, und demzufolge auch andauernde Neigungen vorkommen können, nämlich sofern sie auf die drehenden Bord-Koordinaten bezogen sind. Beispielsweise tritt bei einer dauerhaftfortgesetzten Kurve eine Neigung zwar in stets wechselnder Himmelsrichtung, jedoch als unverändert andauernde Roll-Neigung auf. Dies würde einen Fehler erzeugen, beim Bilden des angenäherten Neigungs-Istwertes aus dem Drehraten-Messwert wegen der erfindungsgemäßen Einschränkung der Integrationszeit, sodass die bisher beschriebene Lösung nicht ausreichen würde.

In einer weiteren Ausgestaltung der Erfindung ist deshalb eine Möglichkeit zur Lösung dieses Problems gegeben. Hierfür kann die oben beschriebene Signalverarbeitung, die sowohl für Roll- als auch Nick-Achse aufgebaut ist, erweitert werden, indem sie von einem Gier-Signal, welches Gierbewegungen, etwa Hochachsen-Drehungen des Rumpfes, signalisiert, beeinflussend gesteuert wird in der Weise, dass bei Gier-Drehungen eine dementsprechende vektorielle Drehung der die Nick-und Roll-Bewegungen betreffenden Signale erfolgt.

Als Gier-Signal kann das Mess-Signal eines zur Heck-Stabilisierung üblichen Gyroskops verwendet werden, oder ein anderes Signal, welches eine Gier-Rate oder einen Gier-Winkel anzeigt. Alternativ oder in Kombination kann ein Gier-Steuersignal verwendet werden, etwa aus dem betreffenden Steuerknüppel. Auch dieses Signal zeigt die Gier-Rate mit ausreichender Genauigkeit an, insbesondere wenn die Gier-Rate durch ein nachgeschaltetes Kreisetsystem proportional zum Gier-Steuersignal geregelt wird. Demnach lässt sich auch das Gier-Steuersignal verwenden, das üblicherweise als Sollwert zu Heckrotor-Stabitisiervorrichtungen gesendet wird.

Die Beeinflussung kann in der Weise erfolgen, dass die integrierten Signale entsprechend der durch das Drehsignal angezeigten Drehung insbesondere vektoriell gedreht werden. Die Drehung kann zwischen den beschriebenen Gier- und Nick-Funktionen untereinander erfolgen. Hierzu kann das als Drehmatrix bekannte Verfahren oder die in der komplexen Zahlenrechnung bekannte Argument-Funktion verwendet werden. Insbesondere kann beispielsweise die Roll-Steuerung einer x-Achse oder einer realen Zahlenachse und die Nick-Steuerung einer y- oder imaginären Zahlenachse zugeordnet werden und die Drehung hierin erfolgen. Die Drehung kann in der Zahlenebene numerisch berechnet werden. Dies kann beispielsweise in programmgesteuerten inkrenmentalen Schritten auf die Speicherinhalte der für Rollen und Nicken vorgesehenen Integratoren 5 erfolgen.

Die erfindungsgemäße Kombination mit der vektoriellen Drehung hat erstens den Vorteil, dass die in den Integratoren bestehenden Neigungs-Istwerte, wenn sie aufgrund korrekter Messung entstanden sind, bei Gierbewegungen entsprechend mit-gedreht werden und ein ansonsten auftretender Messfehler vermieden wird. Ein Hubschrauber, der beispielsweise eine aktuelle Neigung nach vorne hat, wird, nach einer 90°-Linkswendung, nach links geneigt sein, oder, nach einer 180°-Wendung, nach hinten geneigt sein, ohne dass Gier- oder Roll- Bewegungen auftraten. Dies kann durch das Verfahren richtig korrigiert werden.

Zweitens ermöglicht die vektorielle Drehung, dass auch dauerhafte Schräglagen während Kurven ausreichend genau angenähert werden trotz der erfindungsgemäßen Eingrenzung der Integrationszeit, da sich die Integrationswerte laufend drehen, wegen ihrer ständigen Wechsel also nicht durch die Eingrenzung der Integrationsdauer gelöscht werden.

Figur 3 zeigt im mittleren Abschnitt die vektorielle Drehung. Das vom Drehraten-Sensor 54 stammende Mess-Signal 55 ist zur Gier-Rate proportional. Der Roll-Istwert vom (oberen) Integrator wird über Multiplizierer 57mit der Gier-Rate multipliziert und als inkrementale Dreh-Änderung in den Nick-Integrator 5' gemischt. Umgekehrt wird negativ der Nick-Istwert 8' in den Roll-Integrator 5 gemischt, sodass beide durch beide Mischungen insgesamt eine inkrementelle Vektordrehung zwischen dem Nick- und Roll- Signal entsteht. Eine andere Möglichkeit ist, mit einer Dreh-Matrix die Neigraten-Messwerte 40, 40' oder die Ausgangssignale oder andere internen Signale miteinander drehend zu vermischen.

Eine weitere Möglichkeit, den Integrator zu verwirklichen, insbesondere um die Neigungsraten-Messwerte zu integrieren sowie wahlweise auch, um die beschreibene mindernde Beimischung des Ist- und / oder Sollwertes zu integrieren, ist die Verwendung eine vektoriellen Drehung, wie sie hier für die Gier-Achse beschrieben wurde. Hierbei kann ein vektorielles Zweibein oder Dreibein definiert werden. Dieses kann zusätzlich einen nach oben gerichteten Vertika-Vektor beinhalten, welcher ebenso der Drehung unterliegt.

Die vorliegende Erfindung kann auch durch Berechnung eines allgemein drehbaren vektoriellen Dreibeins realisiert werden.

Insbesondere kann die beschriebene Integration, welche einen Eingang und einen Ausgang besitzt, dadurch erreicht werden, dass allgemein ein vektorielles Dreibein gemäß einer als Eingangssignal vorgegebenen Winkelgeschwindigkeit rechnerisch gedreht wird. Die Drehung kann erfolgen, indem in einer zyklisch wiederholten Rechnung das Dreibein inkremental um einen kleinen Winkel weitergedreht wird, wobei der kleine Winkel durch den Eingangswert der Winkelgeschwindigkeit vorgegeben wird. Hierzu kann das Mess-Signal des Drehratensensors herangezogen werden. Die resultierende Auslenkung des vektoriellen Dreibeins kann als Ausgangssignal herangezogen werden. Der Vorgang stellt eine Integration dar. Das Ausgangssignal kann bei kleinen Winkeln näherungsweise linear sein, es kann einer Auslenkung des Dreibeins entsprechen. Hierzu kann etwa ein Dreh-Winkel, oder einfacher auch direkt eine der Vektor-Koordinaten berechnet oder herangezogen werden. Eine so definierte Auslenkung gilt im Sinne dieser Erfindung ebenso als Integral und ist hierzu verwendbar. Die Eingrenzung der Integrationszeit kann demnach erfolgen, indem ein die Auslenkung des vektoriellen Dreibeins kennzeichnender Rechenwert negativ in den die Drehrate bestimmenden Winkelgeschwindigkeits-Eingangswert eingemischt wird.

Solche Ausführungsformen ermöglichen, dass nach Überschlägen mit Rückenlage und Rückkehr in die Normalfluglage die berechneten Integrale richtig zurückgedreht werden.

In einer weiteren Ausführung, die zum Stabilisieren von Rückenflug geeignet ist, kann die Einmischung des Integrals 8 in den Stellwert mit umgedrehter Polarität, d.h. mit umgekehrtem Richtungssinn oder Vorzeichen erfolgen. Hierdurch ist ein durch den Istwert-Sollwert-Vergleich entstehender Regelkreis in Rückenlage stabil. Die Richtungsunkehr kann in Abhängigkeit des Vorzeichens einer Vertikalkomponente eines entsprechend der Fluglage gedrehten Vertikal-Vektors erfolgen. Hierdurch kann erreicht werden, dass die Umkehr automatisch dann erfolgt, wenn die Fluglage in Rückenlage wechselt, also ohne Umschalten in beiden Lagen eine stabile Regelung ermöglicht. Die Richtungsumkehr kann erreicht werden, indem das umzukehrende Integral mit dem Wert der Vertikalkomponente multipliziert wird.

Da bei programmierbaren Sendern nach dem Stand der Technik ohnehin ein programmgesteuerter Mikroprozessor als Bestandteil üblich ist, kann die vorliegende Erfindung zumindest teilweise in eine schon vorhandene Hardware mit einer Software nachgerüstet werden, welche die Durchführung der beschriebenen Verfahren steuert.

Die Vorrichtung kann auch an Bord des Luftfahrzeugs vorgesehen sein. Die Vorrichtung kann mit einem Bordmischer baulich vereint sein, oder mit einem Fernsteuerempfänger.
Die beschriebenen Mischungen können aus einer Addition oder einer beliebigen anderen Art der Überlagerung bestehen.

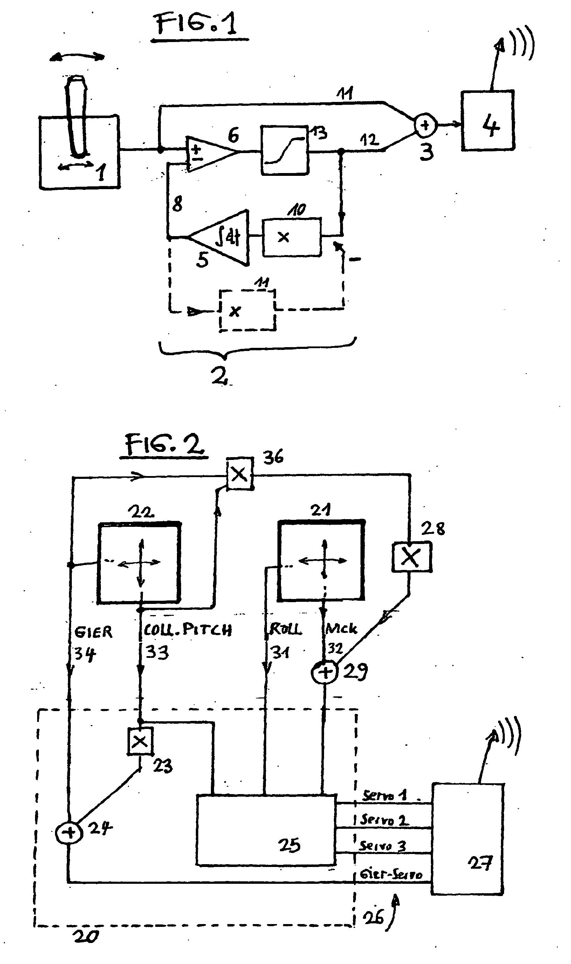

Nachfolgend werden die Ausführungsbeispiele gemäß Figuren 1 und 2 beschrieben.

Auch diese ermöglichen es dem Piloten, zumindest näherungsweise den Neigungswinkel zu steuern, also beispielsweise einen Nick- und / oder Roll- Winkel, sodass bei Neutralisieren des Steuerknüppels der betreffende Neigwinkel selbstständig und weitgehend auf horizontale Lage zurück geht.

Herkömmlicherweise muss jede zur Lenkung eingenommene nicht-neutrale Fluglage, etwa eine Roll-oder Nick-Neigung, durch einen wohldosierten Gegenausschlag am Geber aktiv zurückgesteuert werden. Der Gegenausschlag hat so zu erfolgen, dass das Produkt aus Dauer und Auslenkung dem ursprünglichen Ausschlag entspricht. Damit wird die gesteuerte Neigung zurückgenommen und eine neutrale Fluglage wiederhergestellt. Dies erfolgt üblicherweise durch den Piloten, wodurch ein Regelkreis entsteht.
Als Hilfe zur Fernsteuerung von unbemannten Luftfahrzeugen und insbesondere Hubschraubern, wird ein vom Piloten gegebenes Steuersignal hochpassgefiltert.

Zur Eingabe von Steuersignalen können Geberelemente dienen, beispielsweise Steuerknüppel oder jede andere kontinuierlich oder quasikonunuierlich wirkende Eingabemittel. Die Steuersignale können beispielsweise über Funk vom Boden zum Luftfahrzeug übertragen werden.

Mindestens ein Steuersignal wird einer Hochpassfilterung unterzogen, und das hochpassgefilterte Signal wird dem Stellwert zugeführt oder zumindest anteilweise beigemischt. Diese Mischung kann direkt zu dem betreffenden Stellglied geleitet werden. Anstelle des herkömmlichen manuellen Steuersignals kann also ein aus diesem manuellen Steuersignal abgeleitetes hochpassgefiltertes Signal verwendet werden. Die Hochpass-fitterung kann auch als Differenzierung nach der Zeit beschrieben werden. Das Stellglied wird also aufgrund der vom Piloten gegebenen Steuer-Betätigung eine Bewegung durchführen, die der Differenzialfunktion der gegebenen Steuerbewegung entspricht oder diese zumindest anteilweise beinhaltet.

Durch dieses Verfahren wird folgendes erreicht: Eine Flug-Situation, welche durch einen am Steuerknüppel gegebenen Ausschlag erreicht wurde, beispielsweise eine Schräglage oder Flugneigung, wird zumindest teilweise wieder zurück-gesteuert, indem vom Hochpass ein entgegengesetzter Steuer-Ausschlag erzeugt wird, und zwar in dem Moment, wenn ein gegebener Steuerknüppel-Ausschlag wieder zurückgenommen wird, etwa wenn der Pilot den Knüppel loslässt. Statt Knüppel kann jede andere Art der Eingabe verwendet werden.

Die Steuerung wird erheblich vereinfacht, da der oben beschriebene Gegenausschlag nicht manuell erfolgen muss, sondern durch die Hochpass-Funktion automatisch erzeugt wird. Somit kann der Pilot die Flugneigung bequem steuern. Vorteil ist, dass dies auch ohne Notwendigkeit einer die Neigung messenden und regelnden Bord-Instrumentierung möglich isL Die Rückstellung einer Neigung geschieht präziser, als es insbesondere bei mangelnder Sichtverbindung herkömmlicherweise möglich wäre. Das Zurücksteuern kann vollständig erfolgen, hierzu würde man das Steuersignal vollständig differenzieren, d.h. ein Hochpassfilter ohne Durchlass für das ursprüngliche Eingangs-Signal verwenden. Meistens ist es jedoch besser, das ursprüngliche Steuersignal zu einem definierten verringerten Anteil mit beizubehalten. Hierzu kann ein ungefilterter Anteil des Steuersignals beigemischt werden. Dies ermöglicht, dass man Driften weiterhin durch Trimmung ausgleichen kann, und dass eine Neutralisierung aus jeder Fluglage heraus durch den Piloten möglich ist.

Eine weitere Anwendung ergibt sich bei Flugkörpern, die ein "giftiges" Steuerverhalten aufweisen, das dadurch stört, dass eine gesteuerte Wirkung sich auch nach Beendigung des Steuerausschlags noch weiter verstärkt. Dieses Überschießen wird durch den vorliegende Erfindungs-Aspekt ebenfalls wirksam unterbunden.

Diese Ausfürhung muss nicht auf die Neigungssteuerung eingeschränkt sein. Sie kann allgemein dazu verwendet werden, um reaktions-träge Steuerfunktionen rascher und angenehmer steuerbar zu machen. Bei jeder verzögert reagierenden Steuerung ergeben sich Vorteile der einfacheren Handhabung. Beim Hubschrauber betrifft dies auch die Vertikalsteuerung, etwa mittels kollektiver Blattverstellung oder mittels Drehzahl, sofern sie zur Vertikalsteuetung variiert. Auch bei Flächen-Flugzeugen, Schiffen und andere Fahrzeugen ergeben sich Vorteile.

Der Hochpass kann durch ein elektrisches RC-Glied oder andere hierzu geeignete elektronische Schaltung realisiert werden. Auch kann der Hochpass rechnerisch, etwa digital und programmgesteuert realisiert werden, wobei das Programm beispielsweise einen Mikrocontroller steuern kann. Ein digital aufgebautes Hochpass kann der Funktion eines RC-Gliedes entsprechen oder ähneln. Die Funktion eines solchen Hochpasses kann mit der des RC-Gliedes veranschaulicht werden. Erfindungsgemäß gibt es jedoch bei der Realisierung des Hochpasses keine Einschränkungen.

Das Merkmal des Hochpasses kann auch dadurch definiert werden, dass vom Signal ein Anteil höherer Frequenz mit größere Amplitude weitergeleitet wird als ein Anteil tieferer Frequenz, oder dass Signal-Änderungen verstärkt werden relativ zu statischen Signal-Anteilen, oder dass statische Signalkomponenten herausgenommen oder zurückgeregelt oder abgeschwächt werden, oder dass ein zeitliches Differenzial gebildet wird, oder dass eine voraus-eilende Phasenverschiebung auftritt oder erzeugt wird. Das Hochpass kann gebildet werden, indem das Signal um eine definierte Zeit verzögert wird und vom aktuellen Signal subtrahiert wird. Ebenso lassen sich allgemein solche Faltungsfunktionen verwenden, die eine Hochpass-Charakteristik aufweisen. Auch kann der Hochpass aufgebaut werden, indem ein gegengekoppelter Integrator oder ein Tiefpass vorgesehen ist und dessen Ausgang vom ursprünglichen Steuersignal subtrahiert wird.

Die Vorrichtung zur Differenzierung oder Hochpassfitterung kann an Bord des Luftfahrzeugs vorgesehen sein; sie kann auch mit einer Sendevorrichtung baulich vereint sein.

Bei Regelkreisen ist die Verwendung eines Differenzierliedes auf Mess-Signale oder auf Istwert-Sollwert-Differenzen üblich (PID- Regelschleife). Im vorliegenden Aspekt der Erfindung ist jedoch kein Mess-Signal erforderlich. Ein Steuersignal, das ausschließlich durch den Piloten gegeben ist, kann differenziert oder hochpassgefiltert werden. Es genügt, wenn keine aus Mess-Instrumenten stammende Signale differenziert oder hochpassgefiltert werden.

Figur 1 zeigt ein Blockschaltbild einer vorzugsweisen Vorrichtung. Das vom Steuerknüppel (1) stammende Gebersignal wird im Subtrahierglied (6) von einem integrierten Signal (8) subtrahiert. Die Differenz wird über den Mischer (3) zur Sender-Einheit (4) geleitet. Außerdem wird die Differenz mit einem definierten Faktor (10) multipliziert und in den Integrator (5) geleitet. Somit ist Integrator (5) rückgekoppelt über den aus (8), (6) und (10) gebildeten Kreis.

Diese Vorrichtung kann für mehrere Steuerfunktionen in gleicher Weise mehrfach vorgesehen sein, z.B. für Nick, Roll und Steigen- Funktion eines Hubschraubers.

Das am Ausgang des Integrators (5) erzeugte Signal (8) folgt langsam dem Steuersignal aus (1), und kann als Simulation der erwarteten Fluglage aufgefasst werden, z.B. bei Verwendung zur Neigunssteuerung als angenäherter Neigungswinkel, da auch der Flugkörper das gleiche integrierende Verhalten aufweist. Die Gegenkopplung des Integrators wirkt daher als eine simulierte Regelung des in (5) simulierten Neigungswinkels.

Das hochpassgefilterte Signal kann verstärkt werden, bevor es an das Stellglied geleitet wird, und dementsprechend starke Ausschläge erzeugen. Um ein Anstoßen der Anlenkung zu verhindern, ist Signal-Begrenzer (13) vorgesehen. Indem der Integrator (5) so angeordnet ist, dass auch er das schon begrenzte Signal erhält, wird erreicht, dass auch bei einem Ansprechen der Begrenzung kein Unterschied auftritt zwischen dem berechneten Integral und der tatsächlich erreichten Flugsituation oder Flugneigung. Fehler durch nichtlineare oder begrenzte Geber-Anlenkung werden somit vermieden.

Es ist vorteilhaft, zusätzlich zum hochpassgefilterten Signal 12 auch einen Anteil 11 des unbehandelten Steuersignals durch Mischer 3 zuzumischen. Dies ermöglicht, dass statische Driften, verbleibende unbestimmte Integrationskonstanten oder äußere Einflüsse ebenfalls durch das vom Piloten gegebene Steuersignal ausgeglichen werden können.
Die Beimischung kann auch dadurch erfolgen, dass der Integrator 5 über den gestrichelt dargestellten zweiten Rückkoppel-Zweig mit Faktor 11 gegenkoppelnd zurückgespeist wird.

Wahlweise kann eine Möglichkeit vorgesehen sein, die Zeitkonstante des Hochpasses, d.h. eine obere Übergangsfrequenz, anzupassen. In Figur 1 kann hierzu Faktor 10 verstellt werden, vorzugsweise über eine Eingabevorrichtung. Allgemein kann die obere Übergangsfrequenz des Hochpasses variiert oder beliebig gewählt werden, um das Steuer-Verhalten zu optimieren. Werte zwischen 0,15 und 0,5 Sekunden haben sich als besonders vorteilhaft herausgestellt. Rasche Zeitkonstanten sind für rasche Steuerfolgsamkeit vorteilhaft; zu rasche Zeitkonstanten bewirken eine unnötige Verstärkung kurzer und zitternder Bewegungen.

Wenn der Hochpass als ein Differenzierglied bezeichnet wird, entspricht diese definierbare Zeitkonstante einer endlichen Differenzier-Zeit dt , oder einem zusätzlichen Tiefpass, der zusammen mit einem idealen Differenzierglied das reale Differenzierglied darstellt. In der resultierenden Übertragungsfunktion entspricht dies einer oberen Grenzfrequenz.

Der ungefilterte Signal-Anteil 11 kann in einem schwächeren Anteil, als es nach dem Stand der Technik üblich ist, beigemischt werden. Vorteil ist eine weniger kritische, weniger feinfühlige Einstellung der Trimmschieber. Alternativ kann der ungenfilterte Anteil den üblichen Pegel behalten, wobei der dazugemischte hochpassgefilterte Signal-Anteil beispielsweise zur zusätzlichen Erhöhung der Steuerfolgsamkeit verwendet werden kann.

Durch das Beimischen eines ursprünglichen Signal-Anteils tritt eine zweite Zeitkonstante auf, welche als das Mischungsverhältnis zwischen Differenzial- und Proportional-Anteil definiert werden kann oder sich hieraus ergibt. Diese Zeitkonstante entspricht einer unteren Grenzfrequenz zwischen konstantem und ansteigendem Frequenzgang in der resultierenden Übertragungsfunktion.

Zur Steuerung der Steigen-Funktion bei verschieden schweren Hubschraubern lassen sich die beschriebenen Zeitkonstanten auf die durch das Gewicht und andere Faktoren bedingte Trägheit so abstimmen, sodass die Steigrate praktisch unverzögert der Knüppel-Stellung direkt proportional folgt.

Weiterhin können die Anteile von gefiltertern und /oder unbehandeltem Steuersignal nichtlinear verändert werden, etwa in Abhängigkeit des gegebenen Steuerausschlages.
Hierfür kann eine Schwelle oder eine Begrenzung vorgesehen sein, oberhalb oder unterhalb derer ein Signal-Anteil verstärkt oder unterdrückt wird, oder ein anderes nichtlineares Glied. Dies ermöglicht Optimierung des Verhaltens je nach Piloten-Wunsch und Anwendung.

Eine Besonderheit hierbei ist, dass keine Bordinstrumente notwendig sind.
Die Vorrichtung zur Differenzierung oder Hochpassfilterung kann daher mit einer Sendervorrichtung baulich vereint sein und erfordert keine Vorrichtung an Bord.

Eine weitere Erschwernis bei Steuerung eines Hubschraubers ist die Kreisetwirkung des Rotors zusammen mit dem dreidimensional verknüpften Richtungssinn. Ein Hubschrauber, der beispielsweise eine aktuelle Neigung nach vorne hat, wird, nach einer 90°-Linkswendung, nach links geneigt sein, oder, nach einer 180°-Wendung, nach hinten geneigt sein. Deshalb müssen beim manuellen Geraderichten die Gier-Bewegungen besonders berücksichtigt werden.

Ein weiteres Erfindungsziel in einer weiteren Ausgestaltung ist demnach eine Möglichkeit zum automatischen Geraderichten unabhängig von Gierbewegungen. Hierfür kann die oben beschriebene Signalverarbeitung erweitert werden, indem sie von einem Gier-Signal beeinflussend gesteuert wird, welches Gierbewegungen, etwa Hochachsen-Drehungen des Rumpfes, signalisiert. Dies ermöglicht bei Drehungen eine adäquate Korrektur der erzeugten Rücksteuer-Signale.

Als Gier-Signal kann das Mess-Signal eines zur Heck-Stabilisierung üblichen Gyroskops verwendet werden, oder ein anderes Signal, welches eine Gier-Rate oder einen Gier-Winkel anzeigt. Alternativ oder in Kombination kann ein Gier-Steuersignal verwendet werden, etwa aus dem betreffenden Steuerknüppel. Auch dieses Signal zeigt die Gier-Rate mit ausreichender Genauigkeit an, insbesondere wenn die Gier-Rate durch ein nachgeschaltetes Kreiselsystem proportional zum Gier-Steuersignal geregelt wird. Vorteihafterweise muss die gemeldete Drehung nur annähernd genau sein. Es lässt sich auch das Gier-Steuersignal verwenden, das üblicherweise als Sollwert zu Heckrotor-Stabilisiervonichtungen gesendet wird. Die Vorrichtung gemäß dieses Erfindungs-Aspektes muss sich somit nicht an Bord befinden, sondern kann am Boden sein.

Die Beeinflussung erfolgt in der Weise, dass die integrierten Signale und/ oder die erzeugten Hochpass-Anteile entsprechend der durch das Drehsignal angezeigten Drehung gedreht werden. Die Drehung kann zwischen beschriebenen Gier- und Nick-Funktionen untereinander erfolgen. Hierzu kann das als Drehmatrix bekannte Verfahren oder die in der komplexen Zahlenrechnung bekannte Argument-Funktion verwendet werden. Beispielsweise kann die Roll-Steuerung einer x-Achse oder einer realen Zahlenachse und die Nick-Steuerung einer y- oder imaginären Zahlenachse zugeordnet werden und die Drehung hierin erfolgen. Vorteilhafterweise kann als Drehsignal ein zur Drehrate proportionales Signal verwendet werden und die Drehung in programmgesteuerten inkrenmentellen Schritten auf die Speicherinhalte der für Rollen und Nicken vorgesehenen Integratoren (5) erfolgen. Eine weitere Schwierigkeit bei Steuerung eines Hubschraubers ist die Tatsache, dass der vom Heckrotor regulär ausgeübte seitliche Schub den gesamten Hubschraubers in eine Translationsbewegung versetzen würde, die aber regulär dadurch aufgehalten wird, dass der Hubschrauber im Schwebeflug eine gegengesetzte Roll-Lage einnehmen muss. Nach einer GierBewegung stört diese Roll-Lage auf die oben beschriebene Weise. Bei einer Wendung um beispielsweise 180° wirken der Schub des Heckrotors und die nun umgedrehte Poll-Lage nicht mehr gegeneinander, sondern miteinander, und lassen den Hubschrauber seitlich abdriften, wenn der Pilot dem nicht rechtzeitig entgegensteuert. Dieses Problem ist besonders ausgeprägt bei leichten Klein-Hubschraubern wegen dem großem Anstellwinkel deren Rotorblätter.

Gemäß einem weiteren Aspekt der Erfindung bzw. in einer weiteren Ausgestaltung ist ein weiteres Erfindungsziel ist dabei die Möglichkeit, bei Gierbewegungen einen automatischen Ausgleich der neutralen Roll-Neigung zu ermöglichen. Hierzu ist eine Signalmischung vorgesehen, welche ein Drehsignal, welches Drehungen um die Gierachse signalisiert, zu einem definierten Anteil zu einem die Nickbewegung steuernden Steuersignal dazumischt, d.h. einmischt. Als Ergebnis erhält der Hubschrauber ein zur Gier-Rate proportionales Steuersignal, das je nach Gier-Richtung (rechts oder links) nach vorne oder hinten gerichtet ist. Weil sowohl die Roll- als auch für Nick-Bewegung inkremental den Steuersignalen folgen, summiert sich im Verlauf einer Drehung die Wirkung des erzeugten Nick-Signals nicht etwa zu einer Nick-Lage, sondern in Phase und Winkel um 90° versetzt, somit in der gewünschten Roll-Korrektur-Richtung, welche die Einflüsse des Heckrotors kompensiert.

Als Gier-Signal kann, ebenso wie oben beschreiben, das Mess-Signal eines zur Heck-Stabilisierung üblichen Gyroskops verwendet werden, oder ein anderes Signal, welches eine Gier-Rate oder einen Gier-Winkel anzeigt. Alternativ oder in Kombination kann ein Gier-Steuersignal verwendet werden, etwa aus dem betreffenden Steuerknüppel. Beispielsweise kann der Sollwert, der zur Ausgabe an ein Heckrotor-Stabilisiervorrichtung vorgesehen ist, als Drehsignal verwendet werden. Auch dieses Signal zeigt die Gier-Rate mit ausreichender Genauigkeit an. Die Vorrichtung kann sich somit wiederum am Boden befinden.

Weil Fernsteuer-Sender üblicherweise schon mit Misch-Vorrichtungen ausgestattet sind, welche beispielsweise die Steuersignale für Kollektiv-Pitch, Nicken und Rollen so miteinander vermischen, dass Taumelscheiben-Servos damit ansteuern werden können, oder welche eine kompensierende Mischung von Kollektiv-Pitch zu Heckrotor oder von Gas zu Heckrotor erlauben, lässt sich die dieses Ausführungsbeispiel betreffende Erweiterung schon dadurch erreichen, dass zusätzlich eine weitere Mischungs-Möglichkeit vom Gier-Steuersignal zum Nick-Steuersignal geschaffen wird. Das Mischverhältnis kann durch den Benutzer einstellbar sein.

Figur 2 zeigt ein Blockdiagramm einer Ausführung der Erfindung, bei der eine Mischung 29 vorgesehen ist, mit der ein Drehsignal 30 zu einem definierten Anteil in ein Nick-Steuersignal 32 gemischt wird. Die beiden Steuerkrtüppel 21 und 22 beinhalten je zwei Geberetemente zur manuellen Erzeugung der Steuersignale Roll 31, Nick 32, Kollektiv-Pitch 33 und Gier 34. Wahlweise kann hier die in Figur 1 dargestellte Hochpassfilterung eingefügt sein (in Fig. 2 nicht dargestellt).

Die Mischer-Vorrichtung 20 beinhaltet eine nach dem Stand der Technik bekannte Mischer-Matrix 25 zur Mischung der für die Taumelscheibe vorgesehenen Sewosignale (26, Servo1, Servo2, Servo3) aus den Steuersignalen Roll, Nick und Kollektiv-Pitch, und ferner eine Mischung (24) zur Beimischung eines Anteils des Kollektiv-Pitch-Signals 33 zum Gier-Signal 34, wobei der Anteil im Skalierer 23 definierbar ist. Die gemischten Signale werden gemeinsam in der Funk-Sendereinheit 27 gesendet.

Erfindungsgemäß ist in dieser Ausführung der zusätzliche Mischer 29 vorgesehen, der einen Anteil eines Drehsignales 34, zum Nick-Steuersignal 32 dazumischt. Als Drehsignal wird in diesem Beispiel einfachheitshalber das Gier-Steuersignal verwendet. Ferner ist ein Multiplizierer 28 vorgesehen, der es ermöglicht, den Misch-Anteil variabel zu definieren, z.B. gemäß einer Einstellung. Das die Nickbewegung steuernde Steuersignal 32 stammt hier direkt von dem Geberelement, welches vom Piloten betätigt wird.
Weil der Heckrotor-Schub vom aktuellen Anstellwinkel der Hauptrotorblätter abhängt, wäre es wünschenswert, wenn sich die Intensität der erfindungsgemäßen Kompensation anpassen würde. Hierfür ist ein Multiplizierer 36 vorgesehen, der ein Kotektiv-Pitch-Steuersignat 33 erhält und hiermit das zur Kompensation gelangende Drehsignal 34 multipliziert. Es ist vorteilhaft, wenn der Nullpunkt des Pitch-Signales ungefähr mit dem Nullpunkt des erzeugten Auftriebs übereinstimmt, weil in beiden Auftriebs-Richtungen sich der auszugleichende Heckrotor-Schub erhöht, mit jeweils entgegengesetztem Richtungssinn der Kompensation.

Die Mischvorrichtung 29 kann auch an Bord vorgesehen sein, und mit den Ausgänge eines Fernsteuer-Empfängers verbunden sein, sodass sie auf die empfangenen Steuersignale wirkt.

Diese Vorrichtung und das betreffende Verfahren kann vorteilhaft auch unabhängig von der oben beschriebenen Hochpassfilterung realisiert werden.

In einer bevorzugten Ausführung können mehrere der hier beschriebenen Ausführungen miteinander kombiniert werden; eine Ausführung kann aber auch unabhängig aufgebaut sein.

Die als Blöcke dargestellten Elemente in Figur 1 oder 2 können als entsprechende Hardware-Bauteile vorgesehen sein; sie können auch als programmgesteuerte Rechenschritte in einem Mikroprozessor verwirklicht sein. Der Mikroprozessor kann in der Sendevorrichtung eingebaut sein. Es kann der gleiche Mikroprozessor verwendet werden, der auch zur Steuerung der herkömmlichen Funktionen verwendet wird.
Die Hochpassfilterung kann auch auf gemischte Steuersignale erfolgen, wie es etwa zur Ansteuerung einer Taumelscheibe üblich ist.

Die Vorrichtung kann auch mit Stabilisier-Vorrichtungen, welche Messinstrumente beinhalten, baulich kombiniert sein. Die beschriebene Vorrichtung kann vorteilhaft mit Mess- und Regelsystemen kombiniert werden, insbesondere solchen zur Flugstabilisierung.
Es kann hierbei zumindest eine Option oder Betriebsart vorgesehen sein, welche für mindestens eine Steuer-Achse keine betreffenden Mess-Signale verwendet.

Die Erfindung ist insbesondere dazu geeignet, als Computerprogramm (Software) realisiert zu werden. Sie kann damit als Computerprogramm-Modul als Datei auf einem Datenträger wie einer Diskette oder CD-Rom oder als Datei über ein Daten- bzw. Kommunikationsnetz verbreitet werden. Derartige und vergleichbare Computerprogramm-Produkte oder Computerprogramm-Elemente sind Ausgestaltungen der Erfindung. Der erfindungsgemäße Ablauf kann in einem Computer und/oder in mikroprozessorgesteuerten Geräen, insbesondere Femstemungen, Anwendung finden. Dabei ist klar, daß entsprechende Computer und Geräte, auf denen die Erfindung angewandt wird, weitere, an sich bekannte technische Einrichtungen wie Eingabemittel (z.B. Tastatur, Mouse, Touchscreen, Schaltpult mit Steuerknüppel), einen Mikroprozessor, einen Daten- bzw. Steuerungsbus, ggf. eine Anzeigeeinrichtung (Monitor, Display) sowie einen Arbeitsspeicher, ggf. einen Festplattenspeicher und Kommunikationseinrichtungen (z.B. Funkübertragungsmittel) enthalten können.

Die oben genannten verschiedenen Varianten und Unter-Ausführungen können beliebig miteinander kombiniert werden.

## Patentansprüche

1. Verfahren zur Steuerung eines unbemannten ferngesteuerten und schwebefähigen Flugkörpers, wobei von einem Piloten mit einem Geberelement (1) ein Steuersignal gebildet wird, wobei zur automatischen zumindest teilweisen Wiederherstellung der Horizontallage des Flugkörpers bei Neutralisierung des Geberelements (1) mindestens ein Drehsignal (12, 40, 41), aus einer Drehrate aus zumindest einer Nick-Neigung oder einer Roll-Neigung gebildet wird, mittels eines Integrators (5, 5') zeitlich integriert wird und das Integral (8, 8') im Rahmen einer Istwert-Sollwert-Regelung als ein Istwert eines Neigungswinkels herangezogen wird, wobei das Steuersignal als Sollwert eines Neigungswinkels herangezogen wird und die Differenz zwischen Istwert und Sollwert als Stellwert einem die Flugneigung steuernden Stellglied zugeführt wird und wobei die Integrationszeit des Integrators (5, 5') gemäß einer definierten Zeitkonstante oder gemäß einem definierten Zeitfenster zeitlich eingegrenzt ist.

2. Verfahren nach Anspruch 1, wobei als Drehsignal ein Drehraten-Messsignal eines gyroskopischen Drehraten-Sensors für mindestens eine der Neigungs-Achsen Rollen und Nicken verwendet wird.

3. Verfahren zur Flugstabilisierung eines unbemannten ferngesteuerten und schwebefähigen Flugkörpers, insbesondere Drehflüglers, insbesondere nach Anspruch 1, unter Verwendung eines Drehraten-Sensors für mindestens eine der Neigungs-Achsen Rollen und Nicken, dessen Mess-Signal zeitlich integriert wird, **dadurch gekennzeichnet, dass** ein vom Piloten gegebenes Steuersignal, nachfolgend Sollwert genannt, neben das Integral des Mess-Signals, nachfolgend Istwert genannt, eingemischt oder eine Differenz damit gebildet wird, ferner **gekennzeichnet dadurch, dass** die Dauer der Integrationszeit gemäß einer definierten Zeitkonstante oder gemäß einem definierten Zeitfenster eingegrenzt ist.

4. Verfahren nach einem der vorausgehenden Ansprüche, wobei zumindest in einer Betriebsart keine weiteren die Neigungsachse betreffenden Neigungs-messenden Instrumente und insbesondere keine Beschleunigungs-messenden Instrumente beteiligt sind

5. Verfahren nach einem der vorausgehenden Ansprüche, **dadurch gekennzeichnet, dass** die eingegrenzte Integrationsdauer länger ist als die Dauer üblicher Steuerausschläge

6. Verfahren nach Anspruch 5, **dadurch gekennzeichnet, dass** die eingegrenzte Integrationsdauer realisiert ist, indem ein definierter kleiner Anteil des Istwertes und/oder des Sollwertes gegensinnig in den Eingang des Integrators (5, 5') gemischt wird sodass sich das Integral über eine längere Zeitdauer entladen kann.

7. Verfahren nach einem der vorausgehenden Ansprüche, **dadurch gekennzeichnet, dass** die Integration mit eingegrenzter Integrationsdauer realisiert wird, indem Messwerte fortlaufend in Zwischenspeicher-Zellen abgelegt werden und aus einer definierten Anzahl gespeicherter und insbesondere gewichteter Werte fortlaufend ein Mittelwert gebildet wird.

8. Verfahren nach einem der vorausgehenden Ansprüche, **dadurch gekennzeichnet, dass** die eingegrenzte Integrationsdauer länger ist als die Dauer üblicher Neigungs-Ausschläge.

9. Verfahren nach einem der vorausgehenden Ansprüche, **dadurch gekennzeichnet, dass** mithilfe eines Gier-Drehsignals, das zumindest näherungsweise die Hochachs-Drehungen des Flugkörpers signalisiert, die Signale als Rechenwerte einer vektoriellen Drehung unterzogen werden, wobei der Drehwinkel vom Drehsignal gesteuert wird.

10. Verfahren nach Anspruch 9, **dadurch gekennzeichnet, dass** die Integration des Neigungs-Drehraten-Signals erfolgt indem ein vektorielles Kordinatensystem mit der Neigungs-Drehrate fortlaufend inkremental rechnerisch gedreht wird.

11. Verfahren nach einem der vorausgehenden Ansprüche, wobei die Differenz (12) zwischen dem Steuersignal (11) und dem integrierten Signal (8) integriert wird und somit das vom Piloten gegebene Steuersignal (11) einer Hochpassfilterung unterzogen wird und wobei die Hochpasfilterung kein aus Messinstrumenten stammendes Mess-Signal betrifft, das hochpassgefilterte Steuersignal (12) dem Stellwert zugeführt oder zumindest anteilsweise beigemischt wird und zumindest teilweise das ursprüngliche Steuersignal (11) ersetzt

12. Vorrichtung zur Flugstabilisierung eines unbemannten und fernsteuerbaren Flugkörpers insbesondere Drehflüglers, bei der für mindestens eine der Neigungs-Achsen Rollen und Nicken ein Drehraten-Sensor vorgesehen ist sowie ein Integrator (5, 5') für das von dem Drehraten-Sensor ausgegebene Mess-Signal, **gekennzeichnet durch** eine elektronische Schaltung, welche ein vom Piloten gegebenes und als Sollwert eines Neigungswinkels verwendetes Steuersignal, nachfolgend Sollwert genannt, neben das als Messwert eines Neigungswinkels verwendete Integral des Mess-Signals, nachfolgend Istwert genannt, mischt oder eine Differenz damit bildet, wobei die Dauer der Integrationszeit gemäß einer definierten Zeitkonstante oder gemäß einem definierten Zeitfenster eingegrenzt ist.

13. Vorrichtung nach Anspruch 12, **dadurch gekennzeichnet, dass** zumindest in einer Betriebsart keine weiteren Neigungs-messenden Instrumente beteiligt sind.

14. Computerprogramm-Produkt, umfassend einen Programmcode, der beim Laden und Ausführen auf einem Mikroprozessor einen Verfahrensablauf nach einem der vorausgehenden Verfahrensansprüche bewirkt.

15. Unbemannter Flugkörper, umfassend eine Vorrichtung gemäß einem der vorausgehenden Vorrichtungsansprüche.

## Claims

1. Method for controlling an unmanned, remotely controlled airborne vehicle which can hover, with a control signal being formed by a pilot with a transmitter element (1), with at least one rotation signal (12, 40, 41) being formed from a rotation rate from at least one pitch inclination or one roll inclination for automatic at least partial reproduction of the horizontal attitude of the airborne vehicle during neutralization of the transmitter element (1), said rotation signal being integrated with respect to time by means of an integrator (5, 5'), and with the integral (8, 8') being used as an actual value of an inclination angle for actual-value/set-value control purposes, with the control, signal being used as the set value of an inclination angle, and with the difference between the actual value and the set value being supplied as a manipulated variable to an actuating element which controls the flight inclination, and with the integration time of the integrator (5, 5') being limited in time on the basis of a defined time constant or on the basis of a defined time window.

2. Method according to Claim 1, with a rotation-rate measurement signal of a gyroscopic rotation-rate censor being used as the rotation signal for at least one of the roll and pitch inclination axes.

3. Method for flight-stabilization of an unmanned, remotely controlled airborne vehicle which can hover, in particular a rotary-wing aircraft, in particular according to Claim 1, using a rotation-rate sensor for at least one of the roll and pitch inclination axes, whose measurement signal is integrated with respect to time, **characterized in that** a control signal which is provided by the pilot, referred to in the following text as the set value, is mixed in together with the integral of the measurement signal, referred to in the
of the integration time is limited on the basis of a defined time constant or on the basis of a defined time window.

4. Method according to one of the preceding claims, with no further inclination-measuring instruments which relate to the inclination axis, and in particular no acceleration-measuring instruments being involved, at least in one operating mode.

5. Method according to one of the preceding claims, **characterized in that** the limited integration duration is longer than the duration of normal control deflections.

6. Method according to Claim 5, **characterized in that** the limited integration duration is provided by mixing a defined small component, of the actual value and/or of the set value in the opposite sense into the input of the integrator (5, 5'), such that the integral can discharge over a longer time period.

7. Method according to one of the preceding claims, **characterized in that** the integration is implemented with a limited integration duration **in that** measured values are stored continuously in buffer-store cells, and a mean value is formed continuously from a defined number of stored and in particular weighted values.

8. Method according to one of the preceding claims, **characterized in that** the limited integration duration is longer than the duration of normal inclination deflections.

9. Method according to one of the preceding claims, **characterized in that** the signals, as computation values, are subjected to vectorial rotation with the aid of a yaw rotation signal, which at least approximately signals the vertical-axis rotations of the airborne vehicle, with the rotation angle being controlled by the rotation signal.

10. Method according to claim 9, **characterized in that** the inclination rotation-rate signal is integrated by computationally incrementally continuously rotating a vectorial coordinate system with the inclination rotation rate.

11. Method according to one of the preceding claims, with the difference (12) between the control signal (11) and the integrated signal (8) being integrated, and with the control signal (11) produced by the pilot thus being subjected to high-pass filtering, and with the high-pass filtering not relating to any measurement signal originating from measurement instruments, with the high-pass-filtered control signal (12) being supplied to the manipulated variable, or with at least a component of it being added, and at least partially replacing the original control signal (11).

12. Apparatus for flight stabilization ot an unmanned and remotely controllable airborne vehicle, in particular a rotary-wing aircraft, in which a rotation-rate sensor is provided for at least one of the roll and pitch inclination axes, as well as an integrator (5, 5') for the measurement signal emitted from the rotation-rate sensor, **characterized by** an electronic circuit which mixes a control signal, which is produced by the pilot and is used as a set value of an inclination angle, referred to in the following text as the set value, together with the integral, which is used as the measured value of an inclination angle, of the measurement signal, referred to in the following text as the actual value, or forms a difference therewith, with the duration of the integration time being limited on the basis of a defined time constant or on the basis of a defined time window.

13. Apparatus according to Claim 12, **characterized in that** no further inclination-measuring instruments are involved, at least in one operating mode.

14. Computer program product, comprising a program code, which, when loaded and executed on a microprocessor, results in a method process according to one of the preceding method claims.

15. Unmanned airborne vehicle, comprising an apparatus according to one of the preceding apparatus claims.

## Revendications

1. Procédé de commande d'un aéronef sans pilote, commandé à distance et capable de planer, dans lequel un signal de commande est formé par un pilote à l'aide d'un élément émetteur (1),
au moins un signal de rotation (12, 40, 41) formé d'une vitesse de rotation constituée d'une inclinaison de tangage et/ou d'une inclinaison de roulis étant formé lors de la neutralisation de l'élément émetteur (1) pour le rétablissement automatique au moins partiel de la position horizontale de l'aéronef étant intégré par rapport au temps au moyen d'un intégrateur (5, 5'), l'intégrale (8, 8') étant utilisée dans le cadre d'une régulation à valeur effective et valeur de consigne comme valeur effective de l'angle de tangage, le signal de commande étant utilisé comme valeur de consigne de l'angle de tangage et la différence entre la valeur effective et la valeur de consigne étant amenée comme valeur de réglage à un organe de réglage qui commande l'inclinaison de vol, la durée d'intégration de l'intégrateur (5, 5') étant limitée temporellement au moyen d'une constante de temps définie ou au moyen d'une fenêtre temporelle définie.

2. Procédé selon la revendication 1, qui utilise comme signal de rotation un signal de mesure de vitesse de rotation d'un détecteur gyroscopique de vitesse de rotation d'au moins un des axes d'inclinaison de roulis et d'inclinaison de tangage.

3. Procédé de stabilisation de vol d'un aéronef sans pilote commandé à distance et apte à planer, en particulier d'un aéronef à voilure tournante, en particulier salon la revendication 1, qui recourt à un détecteur de vitesse de relation pour l'axe d'inclinaison de roulis et/ou l'axe d'inclinaison de tangage, dont le signal de mesure est intégré par rapport au temps, **caractérisé en ce qu'**un signal de commande émis par le pilote, appelé valeur de consigne dans ace qui suit, est injecté en plus de l'intégrale du signal de mesure, appelée dans ce qui suit valeur effective, ou **en ce qu'**une différence entre les deux est formée, et **caractérisé en outre en ce que** la durée d'intégration est définie au moyen d'une constante de temps définie ou au moyen d'une fenêtre temporelle définie.

4. Procédé selon l'une des revendications précédentes, dans lequel aucun autre instrument de mesure de l'inclinaison de l'axe d'inclinaison et en particulier aucun instrument de mesure d'accélération n' interviennent dans la mode de pilotage.

5. Procédé selon l'une des revendications précédentes, **caractérise en ce que** la durée limitée d'intégration est plus longue que la durée des écarts de commande.

6. Procédé selon la revendication 5, **caractérisé en ce que** la durée limitée d'intégration est définie en mélangeant une petite partie définie de la valeur effective et/ou de la valeur de consigne en sens opposé à l'entrée de l'intégrateur (5, 5'), pour autant que l'intégrale puisse être déchargée sur une durée plus longue.

7. Procédé selon l'une des revendications précédentes, **caractérisé en ce que** l'intégration est réalisée sur une durée d'intégration limitée en plaçant les valeurs de mesure de manière continue dans des cellules de mémoire intermédiaire et en formant en continu la valeur moyenne d'un nombre défini de valeurs conservées en mémoire et en particulier pondérées.

8. Procédé selon l'une des revendications précédentes, **caractérisé en ce que** la durée d'intégration limitée est plus longue que la durée des écarts d'inclinaison habituels.

9. Procédé selon l'une des revendications précédentes, **caractérisé en ce qu'**à l'aide d'un signal de rotation de lacet qui signale au moins approximativement les rotations de l'axe de lacet de l'aéronef, les signaux sont soumis en tant que valeurs de calcul à une rotation vectorielle, l'angle de rotation étant commandé par le signal de rotation.

10. Procédé selon la revendication 9, **caractérisé en ce que** l'intégration du signal de vitesse de rotation d'inclinaison s'effectue en faisant tourner par calcul et par incréments un système de coordonnées vectorielles avec la vitesse de rotation d'inclinaison.

11. Procédé selon l'une des revendications précédentes, dans lequel la différence (12) entre le signal de commande (11) et le signal intégré (8) est intégrée et le signal de commande (11) émis par le pilote est ainsi soumis à un filtrage passe-haut, le filtrage passe-haut ne concernant pas un signal de mesure qui provient d'instruments de mesure, le signal de commande (12) ayant subi le filtrage passe-haut étant apporte à la valeur de réglage ou étant au moins partiellement mélangé à ce dernier et remplaçant au moins partiellement le signal de commande (11) initial.

12. Procédé de stabilisation du vol d'un aéronef sans pilote et commandé à distance, en particulier d'un aéronef à voilure tournante, dans lequel un détecteur de vitesse de rotation est prévu pour au moins l'un des axes d'inclinaison de roulis et de tangage, ainsi qu'un intégrateur (5, 5') pour le signal, de mesure délivré par le détecteur de vitesse de rotation,
**caractérisé par**
un circuit électronique qui mélange un signal de commande émis par le pilote et utilisé comme valeur de consigne d'un angle d'inclinaison, appelée valeur de consigne dans ce qui suit, et l'intégrale du signal de mesure utilisée comme valeur de mesure d'un angle d'inclinaison, appelée valeur effective dans ce qui suit, ou en forme la différence, la durée d'intégration étant limitée au moyen d'une constante de temps définie ou au moyen d'une fenêtre temporelle définie.

13. Dispositif selon la revendication 12, **caractérisé en ce que** dans au moins un mode de fonctionnement, aucune autre instrument de mesure d'inclinaison n'intervient.

14. Produit de programme informatique comprenant un code de programme qui, lorsqu'il est chargé et exécuté sur un microprocesseur, a pour effet l'exécution d'un procédé selon l'une des revendications de procédé qui précèdent.

15. Aéronef sans pilote, comprenant un dispositif selon l'une des revendications de dispositif qui précèdent.
